# EUROPEAN PATENT APPLICATION

(11) **EP 3 820 156 A1**
(43) Date of publication of application: **12.05.2021**
(21) Application number: 20205622.2
(22) Date of filing: 04.11.2020
(51) Int. Cl.: H04Q 9/00, H04W 74/06, H04W 84/12, H04W 84/20

(54) **TWO-WAY WIRELESS COMMUNICATION PROTOCOL BETWEEN MASTERS AND SLAVES ALLOCATING TIME INTERVALS**

(30) Priority: 07.11.2019 IT 201900020558
(71) Applicant: Q.S.D. Sistemi Srl, 20060 Pessano con Bornago (IT)
(72) Inventor: GALIMBERTI, Giovanni Battista, I-20060 Pessano con Bornago (IT)
(74) Representative: Metroconsult Srl

(57) **Abstract**

Method of communication via a "local-area" bidirectional wireless protocol between at least one master electronic unit and one or more peripheral electronic units, comprising:
- providing at least one master electronic unit (M), each master electronic unit (M) being adapted to output messages comprising a cyclical bearer containing data including commands intended for one or more of said peripheral electronic units (P1,....Pm) connected to it only, and to receive replies from said one or more peripheral electronic units (P1,....Pm) within time intervals assigned by said master electronic unit (M) between successive bearers, in non-overlapping time slots among different peripheral electronic units,
- providing one or more peripheral electronic units (P1,....Pm), each one adapted to synchronize itself with said master electronic unit (M) in order to receive said cyclical bearer, to acknowledge that it is the addressee of said cyclical bearer, and to send one or more reply messages to said master electronic unit (M) within said time intervals between successive bearers,
- said cyclical bearer comprises a header field and a commands field,
- said header field comprises: a first message-header field of fixed length, containing data adapted to identify the sender, whether a master electronic unit (M) or a peripheral electronic unit (P1,....Pm); a Bearer-Header field of fixed length, containing addresses of said one or more peripheral electronic units (P1,....Pm) to be connected, system data adapted to establish communication rules, a progressive counter field (Counter240) adapted to number the cyclical bearers, a cyclical data field (data240) containing status data and rules, a cyclical address field of said peripheral electronic units to be connected;
- said commands field, of variable length, comprises data relating to commands for said one or more peripheral electronic units (P1,....Pm) to be connected, comprising, for each peripheral electronic unit to be connected, data relating to: peripheral address, command length, time slot number, command identifier, Id-session transaction identifier;

- each one of said reply messages comprises: a second message-header field of fixed length, containing data adapted to identify whether the transmitting unit is said master electronic unit (M) or one or more of said peripheral electronic units (P1,....Pm), a header-reply field of fixed length, containing data adapted to identify the peripheral address and the message type, a header-data field, containing data associated with the reply.

## Description

### Field of the invention

The present invention relates to the field of transmission protocols, and more specifically to a method of bidirectional wireless communication between one or more master electronic units and one or more peripheral electronic units, and to an electronic system using said communication method.

### Background art

Devices are available on the market which integrate into a single chip both a normal microprocessor with on-board flash and RAM memories and the data string (stream) transmission part.

Such devices have been conceived to solve problems related to transmitting information while also acquiring and processing the same. They normally contain, internally wired, the lower layers of the transmission protocol, such as layer 1 (physical layer) and layer 2 (framer, buffer start and end with crc error check).

Therefore, such devices make it possible to easily transmit a character string containing the information to be transmitted.

For example, a generic transmission message is composed as follows (indicated below are the lengths in bytes used in the EFR32 component by Silicon Labs):

| 6 bytes | 4 bytes | Variable length | 4 bytes |
|---|---|---|---|
| Preamble | Sync | Payload | crc |

The most common use is to transmit information from the periphery to the center for data collection.

Normally the periphery is battery-powered, whereas the center is powered by the network and connected for data collection.

Normally the periphery comprises multiple peripheral (slave) units in different physical locations, whereas the center or concentrator comprises a server (master) unit. Master-slave communication occurs via cable.

The technology employed requires a high power consumption of these devices during the transmission and reception phases, while power consumption is very low in the idle state.

When the information is to be transmitted from the periphery to the center, as in many data collection applications, the peripheral becomes active (wake-up state), transmits the information, and then returns into the sleep state, waiting for a new activation.

Subsequent time references may exist, synchronized with peripheral transmission, when the concentrator supplies a reply indicating that the message sent by the peripheral has been correctly received.

When multiple simultaneous transmissions from multiple peripherals overlap, the peripheral is equipped with a randomizer (random generator) that will send a new message after a random time, hoping that it will find a space free of any other transmissions.

This method simplifies the transfer of information from periphery to center, but complicates the transfer of information from center to periphery because the peripheral should always be active to be able to capture the information sent by the center, resulting in a high power consumption of the peripheral itself.

According to a known method for reducing the peripherals' power consumption, the concentrator repeats the message many times and the peripheral turns itself on at intervals shorter than the duration of the repetitions.

However, such a system fills up the transmission channel with a considerable amount of useless messages, *de facto* reducing the channel's transmission capacity.

### Summary of the invention

It is therefore the object of the present invention to propose a method of bidirectional wireless communication between one or more master electronic units and one or more peripheral electronic units, and an electronic system using said communication method, which can overcome all of the above-mentioned problems.

The present invention aims at providing a synchronous wireless transceiving protocol between one or more concentrators and one or more peripherals, for the purpose of:
- minimizing the peripherals' power consumption
- fully exploiting the transmission channel
- ensuring data transfer certainty

This is achieved also through the emission of a cyclical bearer every BaseTime (which will be defined hereinafter), with which all peripherals synchronize in order to obtain the data containing the commands that they will have to execute.

Furthermore, maximal data packing has been achieved by implementing a protocol containing only the information necessary for a simple and functional communication between Center and Peripheral, and vice versa, avoiding the transmission of any useless or unimportant fields.

The peripherals turn on just before the expected bearer emission, and turn themselves off after having processed the data contained in the bearer, thus remaining active only as long as strictly necessary.

The bearer must therefore contain all the information that will need to be transmitted from the center (concentrator) to the various peripherals.

Bearer transmission is followed in time by the identification of a series of non-overlapping time slots, within which a single peripheral will be allowed to reply to the concentrator with an acknowledgement message or by sending data about any events that may have occurred. Of course, the concentrator will take it upon itself to assign non-overlapping time slots to the various peripherals.

Also, the concentrator may assign these time slots either statically or dynamically.

If the time slot is assigned dynamically, it will be valid only after the bearer of the received command. Conversely, if the time slot is assigned statically, the peripheral will be able to use it for transmitting information also after the reception of the command, until it receives a time slot deletion command.

The electronic system essentially comprises three types of elements:
- A central unit (optional);
- One or more concentrators (or masters), optionally bidirectionally connected to the central unit;
- Multiple battery-powered peripherals bidirectionally connected to respective concentrators via a radio (wireless) transmission channel. Each peripheral communicates bidirectionally with one concentrator, while each concentrator communicates with one or more peripherals.

### Central unit

This unit is normally connected to a server (e.g. a company computer) and is connected to the various concentrators via Ethernet TCP/IP. This unit is adapted to make all high-level decisions.

### Concentrator

There are one or more concentrators whose task is to provide radio coverage (typically 868MHz wireless communication) of the whole area concerned by the peripherals. Therefore, one or more concentrators will be able to connect to respective peripherals.

The communication between the central unit and the concentrator is of a *per se* known type and is not a part of the present invention.

### Peripheral

There are one or more peripherals bidirectionally communicating with a respective concentrator via a particular wireless communication protocol which is the subject of the present invention, as will be described below. In addition to the operations of the transmission protocol, this apparatus can also execute other tasks that are necessary for the operation of the peripheral itself. The software part is optimized for minimizing power consumption.

The present invention concerns a method of communication via a "local-area" bidirectional wireless protocol between at least one master electronic unit and one or more peripheral electronic units, comprising:
- providing at least one master electronic unit, each master electronic unit being adapted to output messages comprising a cyclical bearer containing data including commands intended for one or more of said peripheral electronic units connected to it only, and to receive replies from said one or more peripheral electronic units within time intervals assigned by said master electronic unit between successive bearers, in non-overlapping time slots among different peripheral electronic units,
- providing one or more peripheral electronic units, each one adapted to synchronize with said master electronic unit in order to receive said cyclical bearer, to acknowledge that it is the addressee of said cyclical bearer, and to send one or more reply messages to said master electronic unit within said time intervals between successive bearers,
- said cyclical bearer comprises a header field and a commands field,
- said header field comprises: a first message-header field of fixed length, containing data adapted to identify the sender, whether a master electronic unit or a peripheral electronic unit; a Bearer-Header field of fixed length, containing addresses of said one or more peripheral electronic units to be connected, system data adapted to establish communication rules, a progressive counter field adapted to number the cyclical bearers, a cyclical data field containing status data and rules, a cyclical address field of said peripheral electronic units to be connected;
   - said commands field, of variable length, comprises data relating to commands for said one or more peripheral electronic units to be connected, comprising, for each peripheral electronic unit to be connected, data relating to: peripheral address, command length, time slot number, command identifier, Id-session transaction identifier;
- each one of said reply messages comprises: a second message-header field of fixed length, containing data adapted to identify whether the transmitting unit is said master electronic unit or one or more of said peripheral electronic units, a header-reply field of fixed length, containing data adapted to identify the peripheral address and the message type, a header-data field, containing data associated with the reply.

The invention also concerns an electronic system configured for using said method.

It is a particular object of the present invention to provide a method of bidirectional wireless communication between one or more master electronic units and one or more peripheral electronic units, and an electronic system using said communication method, as further set out in the claims, which are an integral part of the present description.

### Brief description of the drawings

Further objects and advantages of the present invention will become apparent from the following detailed description of a preferred embodiment (and variants) thereof and from the annexed drawings, which are supplied merely by way of non-limiting example, wherein:
Figure 1 is a block diagram of the system of the present invention;
Figure 2 shows a time-based diagram relating to an example of evolution in time of the outputs of the system elements (concentrator and peripherals);
Figure 3 shows a table of check characters that may be used in an exemplary and non-limiting embodiment of the system.

### Detailed description of some embodiments of the invention

In the present context, the definitions listed in the table below will be adopted.

| Name | Meaning |
|---|---|
| | |
| Center | Central point of the network connected to the Internet and powered by the electric grid. |
| | It collects and/or sends information. |
| Concentrator or master | Electronic apparatus located at the center, also referred to as master. |
| Periphery | Set of peripheral points sending or receiving information to/from the center. |
| Peripheral | Electronic apparatus located in the periphery (one of many). |
| Bearer | Cyclical signal sent by the concentrator every BaseTime and used by the peripherals for synchronizing. It also contains various commands for the peripherals. |
| | The concentrator sends no other message; all center-to-periphery information is contained in the bearer. |
| Reply | Reply message from peripheral to concentrator, sent within the respective time slot. |
| BaseTime | Time interval between one bearer and the next. |
| Transaction | Set of communications including interrogation, reply and any other associated events. |
| | It establishes a bidirectional flow between a concentrator and a peripheral for the purpose of exchanging information between these two entities. |
| Central unit | The unit to which all concentrators are connected and from which all messages start. |
| | The central unit performs the task of coordinating all the various concentrators. |
| | For example, the central unit is connected to the concentrators via Ethernet. |

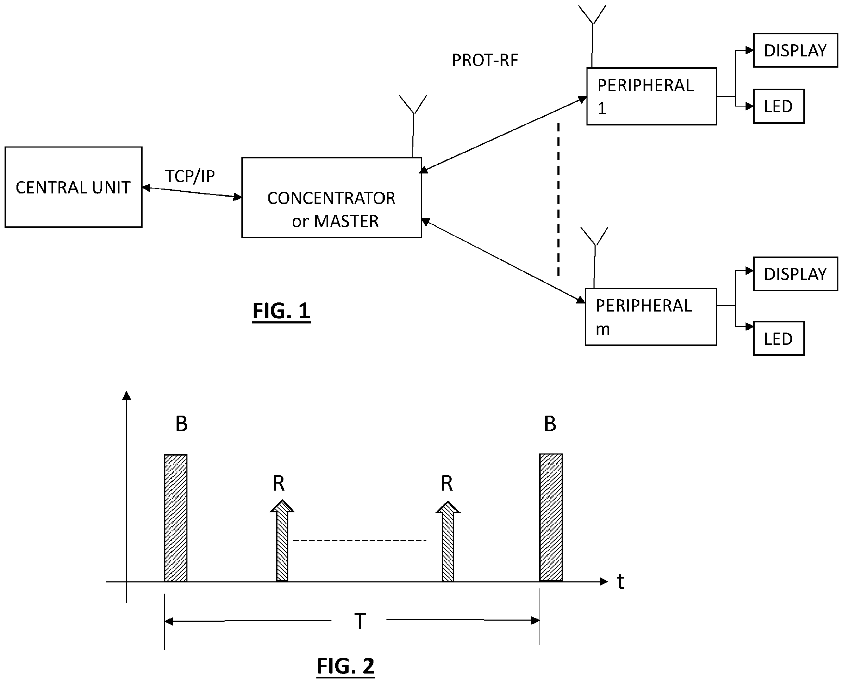

With reference to Figure 1, the electronic system essentially comprises, as already mentioned above, three types of elements:
- An optional central unit;
- One or more concentrators (masters), possibly bidirectionally connected to the central unit;
- Multiple battery-powered peripherals bidirectionally connected to respective concentrators via a radio (wireless) transmission channel. Each peripheral communicates bidirectionally with one concentrator.

### Central unit

This unit is normally connected to a server (e.g. a company computer) and is connected to the various concentrators via Ethernet TCP/IP.

This unit will make all high-level decisions.

### Concentrator

There are one or more concentrators whose task is to provide radio coverage via a PROT-RF type protocol (typically 868MHz wireless communication) of the whole area concerned by the peripherals. Therefore, one or more concentrators will be able to connect to respective peripherals.

The distance between the concentrator and the peripherals connected thereto may be, for example, of the order of a few hundreds of meters, typically 50 to 500 m, of the type technically defined as "local area", wi-fi type. The covered distance is wider in open fields, while it is smaller in indoor environments and buildings, in the presence of obstacles. The distance is also dependent on the transmission frequency in use, as well as on the type of use, e.g. operators having to move within specific spaces in indoor environments, e.g. for picking up parts or components from shelves.

Wider distances can also be covered, e.g. by using multiple concentrators, whether independent or set up in a multi-master environment.

In one non-limiting example, each concentrator is composed of two microprocessor units:
- Embedded board (e.g. implemented by using the EFR32® component by Silicon Labs®), which uses the same component as the peripheral,
- Board provided with a Linux operating system (e.g. iMX1), with one or more TCP/IP channels available, which will be entrusted with high-level operations.

The two boards communicate with each other via a serial bus.

### Peripheral

In addition to the operations of the transmission protocol, this apparatus can also execute other tasks necessary for the operation of the peripheral itself.

The software part is optimized for minimizing power consumption.

In a non-limiting example, the hardware part is a very low-cost battery-powered electronic apparatus based on a device incorporating both the radio part and the processing part, e.g. implemented by using the EFR32® component by Silicon Labs®.

The peripheral may be equipped with a screen DISPLAY and indicator lights LED.

### General information about the concentrator-peripheral bidirectional transmission protocol.

The following will describe the general rules that must be observed by the concentrator-peripheral (also referred to as center and periphery) bidirectional wireless transmission protocol, which envisages the bidirectional wireless transmission of messages.
- The messages generated by the concentrator are called "bearers", while those generated by the peripheral are called "replies".
- The information sent from concentrator to peripheral is present in the bearer only.
- Each concentrator-peripheral message, and vice versa, contains an initial field for its correct identification, called Message Header, which contains the following indications:
   ∘ Total message length
   ∘ Message type
   ∘ Concentrator address (1 .. 30, if peripheral = 0)
- The bearer is divided into three fields: Message Header, Bearer Header and commands:
   ∘ Message Header field: contains general message information useful for identifying the message.
   ∘ Bearer Header field: cyclically contains system status information and the list of connected peripherals.
   ∘ Commands field: contains the various commands to be executed by the various peripherals.
- The Commands field must contain the following information (command header)
   ∘ Peripheral address
   ∘ Command identifier
   ∘ Command length
   ∘ Index of the reply time slot in which the peripheral will be allowed to reply
   ∘ Command session identifier
- The command header is followed by the data field, which may have a variable length.

The following table lists the definitions of the various type of fixed-length headers that manage the communication between concentrator and peripheral, and vice versa.

The sizes in bytes are merely indicative.

| Header Name | Size [bytes] | Meaning |
|---|---|---|
| Message Header | Fixed length, e.g. 2 bytes | This field is always present at the beginning of each message. It identifies the type of the transmitted message. |
| Bearer Header | Fixed length, e.g. 4 bytes | This field is only present in the bearer (concentrator-peripheral message). |
| | | It provides general system information. |
| | | It cyclically contains: |
| | | The addresses of all peripherals that will be connected to the system. |
| | | A system dataset defining the communication and system rules. |
| Command Header | Fixed length, e.g. 5 bytes | Header of an individual command. |
| | | It precedes each command and provides information useful for correctly managing the command in question. |
| | | It is only present in the concentrator-peripheral message. |
| Header Reply | Fixed length, e.g. 3 bytes | Header of the peripheral's reply. |
| | | It is only present in the peripheral-concentrator message. |
| | | It follows the Message Header. |

The following table lists the definitions of the fields of the concentrator-peripheral message (bearer). The sizes in bytes are merely indicative.

| | Field Name | Size [bytes] | Meaning |
|---|---|---|---|
| | Message header | Fixed length, e.g. 2 bytes | It identifies the message sender: peripheral or concentrator, and, in multi-master configuration, which concentrator . |
| | | | It also contains synthetic system status information. |
| | Bearer header | Fixed length, e.g. 4 bytes | It cyclically contains detailed system information. |
| | | | This is static information which is used by the peripheral for knowing how to behave within the system. |
| | | | It also contains the list of the addresses of the connected peripherals in order to allow the peripherals to know which master (concentrator) they must synchronize with. |
| | Command to peripheral 1 | Command Header - Fixed length, e.g. 5 bytes | Header of the command for a single peripheral. It contains: |
| | | | • Peripheral address |
| | | | • Command length |
| | | | • Time slot number |
| | | | • Command identifier |
| | | | • Id-session |
| | | | Together with "Command Data", it may be repeated until buffer saturation (when maximum size is reached). |
| | | Command Data - Variable length | Data associated with the command, of variable length and dependent on the individual command. |
| | .... .... .... .... | | |
| | Command to peripheral N | Command Header - Fixed length, e.g. 5 bytes | Header of the command for the n-th peripheral. |
| | | Command Data - Variable length | Data associated with the command, of variable length and dependent on the individual command, for the n-th peripheral. |

Furthermore, the fields of the Bearer Header are the following:

| Field name | Size [bytes] | Bearer Header fields |
|---|---|---|
| Counter240 | 1 byte | Progressive counter from 0 to 239. |
| | | It is used for numbering the various bearers. |
| Data240 | 1 byte | Cyclical system data indicating the system status and the various rules. |
| Cyclical Address | 2 bytes | Cyclical addresses of all peripherals connected or to be connected to the concentrator. |

The "Command to peripheral 1....N" fields may be either present or not (bearer with no commands) and may be repeated for each command being sent until transmission buffer saturation occurs or the maximum transmissible length is reached.

The following table lists the definitions of the fields of the peripheral-concentrator message. The sizes in bytes are merely indicative.

| Field Name | Size [bytes] | Meaning |
|---|---|---|
| Message Header | Fixed length, e.g. 2 bytes | Identifies the sender of the peripheral-concentrator message. |
| Header Reply | Fixed length, e.g. 3 bytes | Allows the concentrator to know the address of the peripheral that has transmitted the message and the message type. |
| Header Data | Variable length | Data associated with the reply. |

### Multi-master option.

According to a non-limiting variant, the system may also have a multi-master configuration, i.e. it may include more than one concentrator.

In such a case, all the bearers of the various masters will be synchronized by a suitable signal outputted by one of the concentrators.

In this case, there must be a "center" that will perform the task of coordinating all the activities of the concentrators and will entrust one of them with the task of outputting this signal.

Therefore, all concentrators will be connected to a higher-level entity (management center, i.e. the above-mentioned central unit), which will provide for coordinating all activities and sending the various commands to the various system peripherals.

A synchronization signal among the various bearers may be sent, or the various bearers of the other concentrators may be used, in which case the latter will have to mutually be in "radio-frequency view".

This synchronization signal will have to contain the information (address) of the master that will send the bearer. Therefore, the designated concentrator will send this synchronization signal to all the other concentrators.

Upon receiving this synchronization signal (e.g. ascii characters), the remaining concentrators will send the bearer, after a comparison with their own address, e.g. during the reception interrupt routine, in order to minimize time delays and jitters.

A very simple system is thus obtained for synchronizing the emission of all bearers of the various concentrators in the system.

### Time slots

With reference to Figure 2, the following will describe a non-limiting example of embodiment of the transmission times. The concentrator outputs sequences of bearers B at regular time intervals T, during which the peripherals can transmit their respective replies R.

In a non-limiting embodiment, a 100Kbit transmission frequency (250ms wireless bearer time slots) may be used for achieving the maximum data transfer rate, in which case one bit will be transmitted every 10 microseconds, i.e. one byte every 80 microseconds.

A preamble of 6 bytes along with a synchronization signal and a crc code of 5 bytes each are also used, for a total of 14 bytes dedicated to: synchronization, framer and checking the correctness of the information received.

In case of a maximum bearer payload of 142 bytes, corresponding to a total of 156 bytes, the message will take slightly less than 13 milliseconds to be transmitted.

Whereas a typical ACK or NAK reply of just one data byte will have a 6-byte payload, for a total of 20 bytes, i.e. a transmission time of approx. 1.6 mSec.

If a length of 24 bytes is reserved for the peripheral's reply, the total payload will be 30 bytes and the transmission of 44 bytes will take 3.5 mSec.

### Id-session transactions

In order to be able to correctly assign the various peripherals' replies to the respective concentrators' interrogations (bearers), the above-defined Id-session field is used (containing 5 bits in a non-limiting example), which is present in both the Command Header of the concentrator's message and the Header Reply of the peripheral.

This field is useful for identifying all transactions, and remains constant throughout the transaction. Upon the next transaction it will be incremented by one.

### Initial peripheral synchronization procedure.

Upon initialization, the peripheral synchronizes with the concentrator on all received bearers.

In the multi-master case, the peripheral will search the "Cyclical Address" field of the above-defined Bearer Header for its own address, and will synchronize with that bearer.

Subsequently it will read the system data by using the above-defined Counter240 and Data240 fields in order to know the system parameters that contain the communication rules. In a non-limiting example, such parameters are: size, number and duration of the various time slots, in addition to other parameters necessary for the operation of the peripheral itself, such as various blinking intensities, time-outs and durations (signals emitted by the indicator lights LED), etc.

This measure makes installation easier because it will not be necessary to program the individual peripherals with specific data, but the peripheral will initially use the data received from the first bearers to reconstruct the system data table; thus, having received the system parameters, it will know how to correctly behave in the system.

### Peripheral states

The peripheral states may be the following.

| Name | Meaning | Notes |
|---|---|---|
| | | |
| IDLE | Peripheral just initialized. | |
| MULTI_BEARER_READ | The peripheral has found its own address in the bearer. | in multi-master configuration only |
| SYNC_ NOT_LOADED | The peripheral is reconstructing the data parameter table. | |
| SYNC_ LOADED | Peripheral active and capable of responding to commands. | |

Initially the peripheral is in a non-synchronized state IDLE.

Upon initialization, the peripheral will look for all existing bearers and will search the various above-defined "Cyclical address" fields for its own address, thus switching into the MULTI_BEARER_READ state (in multi-master configuration only).

After having found its own address in one of these bearers (in multi-master configuration only), it will switch into the SYNC_NOT_LOADED state, in which it will listen to this bearer only, but will still have to learn the cyclical system parameters.

After having received all such parameters and checked the crc code, it will finally switch into the SYNC_LOADED state, in which it will be able to respond to the various commands.

Only at this point the peripheral will be active and ready for transmission and reception.

### Synchronization loss and "sleeping" of the peripheral.

Should the peripheral no longer be able to synchronize with the master, an excessive number of bearers will be lost.

This may happen due to a signal loss, possibly caused by the peripheral's position, e.g. in a remote warehouse with no radio frequency coverage.

In the event of loss of synchronization, the peripheral will execute a "sleeping" program consisting of the following steps.

It will then switch into an alternately active and inactive state according to a progressive time sequence like the following.

For a given initial time, e.g. for the first 20 minutes, it will be alternately active and inactive (e.g. active for 5 s and inactive for 5 seconds).

Then it will be active for 5 seconds every 2 minutes for 8 more hours.

Subsequently it will be active for 5 seconds every hour for 20 more days.

It will then fall into a "sleep" state, with only one second of activity per hour, from which it may then "wake up" for resuming its normal operation.

These data are contained in a table and may be changed at will.

This method is used for the purpose of hugely reducing the power consumption of the device in case of loss of synchronization and preventing undue battery depletion in the event that the concentrator is disconnected.

### Available command types

The commands contained in the messages exchanged between concentrator and peripheral can essentially be divided into two categories:
- Commands that can only be sent from the concentrator to the peripheral
- Commands that can be sent both ways

For example, the following commands may be used:

| Name | Commands that can be sent both ways |
|---|---|
| | |
| CMD_ ACK_INFO | Message acknowledged reply command from the peripheral. |
| MSG_NACK | Message NOT acknowledged reply command. |
| CMD_ ENQUIRE | Interrogation or reply to a request. Followed by one byte identifying the request type (0 to 255). |
| CMD_ BUTTON | Peripheral event, button pressed. |
| spare | |
| spare | |
| spare | |

| Name | Commands that can only be sent from the concentrator to the peripheral |
|---|---|
| | |
| CMD_ HOT_MODE | The peripheral must switch into HOT mode to listen to all bearers in order to be as fast as possible, despite a higher power consumption. |
| CMD_SET_CONF | For future implementations. |
| CMD_DEBUG | Debug message for having the peripheral perform particular actions. |
| CMD_ LINE_ ON | A line is enabled and the static time slot is considered. |
| CMD_ LINE_ OFF | A line is disabled and the static time slot can be deleted. |
| CMD_GENERIC_CMD | A generic command is executed. Followed by one byte identifying the command type (0 to 255). |
| CMD_ ERASE_ SECT | One sector of the peripheral's flash memory is deleted. Used for software update. |
| CMD_ PROGRAM_ SECT | 128 bytes at most are written to the flash memory. Used for software update. |
| CMD_ACK_CONC | ACK command from concentrator to peripheral. It means that an event message has been acknowledged. |
| CMD_ ENA_MOD | Enables device software change. |
| CMD_CHG_CHAN | Changes the RF channel in use. |
| spare | |
| spare | |
| spare | |

### Time slot types.

Time slots can be managed in two ways: static or dynamic.

| | |
|---|---|
| Dynamic time slot | A dynamic time slot is only valid until the concentrator receives the ACK. |
| Static time slot | A static time slot is valid until the peripheral receives a particular command for deleting that time slot. |

The assignment of the time slot type depends on the type of command.

Some commands require that the peripheral should be able to send further replies for delayed events.

On the contrary, other commands are resolved in a single transaction (interrogation-reply). Moreover, time slots can be divided as a function of the content of the reply (see table below), i.e. they may contain either little information, such as CMD_ACK_INFO, defined as "small time slots", or much information, like the above-described CMD_ENQUIRE command, defined as "big time slots". See the following table as a non-limiting example.

| | |
|---|---|
| Big time slot | This time slot contains particular detailed information about the peripheral, such as the various replies to the CMD _ENQUIRE command, which may, for example, contain the following information: |
| | • RSSI and line quality: indicates the peripheral's reception quality |
| | • Time Measure: indicates the times of execution of the individual tasks (for diagnostic purposes) |
| | • Special Time: other times |
| | • Errors: system errors (particular traps) |
| | • Warnings: system faults (particular traps) |
| | • Sections: correctness of the code in the various sections and version |
| | • Battery: battery voltage under a particular load |
| Small time slot | This time slot may only contain the CMD ACK INFO reply, with minimal and synthetic information about the peripheral contained in just one byte. |

### Modes of data transmission from the concentrator.

The data (commands) are sent by the central unit to the concentrator, where they are stored into a command table to be transmitted.

Prior to bearer transmission, this table is read and the radio-frequency part is loaded, which is thus ready to transmit the bearer.

Upon reception of the synchronization signal, under interrupt in order to avoid any time delays and jitters, the previously loaded bearer is transmitted.

Upon reception by the peripheral, the bearer will be decoded and, if it includes a command, the latter will be executed.

A delay will also be programmed as a function of the system parameters previously received and as a function of the time slot received in the command itself, for transmitting the ACK reply.

Upon reception of such confirmation, the concentrator will stop entering this command into the bearer and the transaction, if it is a dynamic one, will be terminated.

In the case of a static transaction, identified by a static command, the static time slot will be reserved for events that may occur in the peripheral itself, e.g. a button pressed by the operator.

Of course, there must be a command or a procedure for deleting the static time slot and eliminating it from the peripheral.

For enquire commands, instead, the peripheral will have to respond with enquire replies containing data. In this case, the concentrator will have to assign a big time slot.

Should the peripheral not understand, the message will be automatically repeated for a given number of times, after which the peripheral will be declared as unreachable.

### Synchronization.

So far it has been assumed that the various peripherals will listen to the Bearer once every BaseTime.

It is however conceivable to put the peripherals into a state in which one bearer is listened to every N1 or every N2 (with N2 >> N1).

These parameters N1 and N2 will be entered into the data240 field as system parameters. In one exemplary embodiment, the peripherals are provided with three levels of attention:
- Hot: all bearers are listened to
- Slow: one bearer every N1 is listened to
- Sleep: one bearer every N2 is listened to

The switching into Sleep mode is caused by a particular command included in the "Message header".

The switching from Slow to Hot, and vice versa, is caused by special commands.

### Description of further implementation details.

As far as the hardware aspects are concerned, a system has been implemented which is based on a 3-level architecture, as previously mentioned.

| Central unit | |
|---|---|
| Concentrator | Based on the EFR32 component by Silicon Labs (embedded board), and an iMX6 Freescale microprocessor with the Linux operating system (Linux board) |
| Peripheral | Based only on the EFR32 component by Silicon Labs |

The two units of the concentrator, EFR32 and iMX6, talk with each other via a UART channel and a *per se* known dedicated protocol.

In the concentrator:
1. The Linux Board receives the data from the central unit on a TCP/IP channel and sends them via UART to the Embedded Board.
2. The Embedded Board receives the data via UART, stores them into the commands table to be transmitted, and sends them in the radio-frequency channel.

The description below will consider an implementation example with the following values, but of course what will be described as a general example will also be applicable to different values:
- 2-byte addressing from 1 to 0xFFFE
- command identifier from 0 to 31 (5 bits)
- reply identifier from 0 to 7 (3 bits)
- time slot number from 0 to 63 (6 bits)
- id-session from 0 to 31 (5 bits)

Also, a Base-Time of 250 mSec is considered to make the system extremely fast.

### Concentrator-peripheral messages (bearers).

The payload of a bearer will therefore be composed as shown in the following table (indicating also the lengths used in the protocol described herein):

| 2 bytes | 4 bytes | Variable length | | Variable length |
|---|---|---|---|---|
| Message header | Bearer header | Command to peripheral 1 | ..... | Command to peripheral N |

Both the peripheral and the concentrator must be able to correctly decode a generic message received; therefore, each message will have to contain an initial "message header":

| Message Header: 2 bytes | | |
|---|---|---|
| 1 byte | 1 byte | |
| 1 byte | 5 bits | 3 bits |
| Total message length | Concentrator address: If = 0 then it is a peripheral | Message type |

The Bearer Header will contain system information common to all peripherals; its use will be described in detail below.

| Bearer Header: 4 bytes | | |
|---|---|---|
| 1 byte | 1 byte | 2 bytes |
| Counter240 | Data240 | Cyclical Address |
| Bearer counter from 0 to 239 | Cyclical system data | Cyclical peripheral address |

A generic command included in the bearer will have the following format:

| Command Header: 5 bytes | | | | | Command Data |
|---|---|---|---|---|---|
| 2 bytes | 1 byte | 2 bytes | | | Variable length |
| 2 bytes | 1 byte | 5 bits | 6 bits | 5 bits | |
| Peripheral address | Command length | Session id | Time slot | Command identifier | Command data field |

### Peripheral-concentrator messages (replies).

The payload of a generic reply will have the following format:

| Message Header | | | Header Reply | | | Header Data |
|---|---|---|---|---|---|---|
| 2 bytes | | | 3 bytes | | | |
| 1 byte | 1 byte | | 2 bytes | 1 byte | | Variable length |
| 1 byte | 5 bits | 3 bits | 2 bytes | 5 bits | 3 bits | Variable length |
| Total message length | Concentrator address If = 0 then it is | Message type | Peripheral address | Session id | Reply identifier | optional |
| | peripheral | | | | | |

Therefore, the payload of the simplest reply may be 5 bytes.

### Bearer Header.

The following will describe more in detail the fields of the Bearer Header:

### Counter240.

This field contains a counter counting from 0 to 239.

This number was chosen because 240 = 2^{∗∗}4 ^{∗}3^{∗}5, i.e. it contains as divisors, in addition to 2, also 3 and 5. This allows dividing the bearer sequence in several ways containing not only 2 as divisors, but also 3 and 5. Starting from 250 milliseconds, as in this case, it is possible to reach one minute (60^{∗}4=240), dividing by 40 one obtains 10 seconds, and by 60 one obtains 15 seconds, etc. This counter identifies the bearer in a sort of multiplot, thus giving a meaning to the next field: Data240.

### Data240.

This field contains the general system information (system parameters) required by the peripherals to be able to operate correctly, such as size, time slot number and various information about the operation of the peripherals themselves.

In this way it is possible to avoid or reduce the need for saving the system parameters to a flash memory, thereby facilitating the installation task.

### Cyclical Address.

In this field the addresses of all peripherals appear sequentially, starting from the lowest one.

The last address must be 0xFFFF, which is considered as a broadcasting address, and is considered as a tag by the peripherals.

### System data update.

The counter240 and data240 fields contain the general system information for all the peripherals.

The number of bytes of the system information must be equal to 240 or a submultiple thereof.

The first byte must be a progressive counter, to indicate any changes in other system data. The last 2, 3 or 4 bytes must be a crc code to ensure data integrity.

In the present example, 40 gross bytes are carried, which correspond to 35 net bytes (1 for counter and 4 for crc).

These bytes are transferred cyclically, the first one when the value 0 appears in the counter240 field, then the next; the sequence ends, therefore, at value 39; at 40 the first byte is re-transmitted, and so on, in a cyclical fashion.

When turning itself on and synchronizing, a peripheral reads sequentially all the bytes and reconstructs the image of the system parameters. After having read all bytes, it checks the crc and switches into the ACTIVE state, i.e. it can respond to the concentrator.

### Multi-master operation.

As previously stated, multi-master operation is also envisaged. In the example described herein it is possible to address up to 30 Masters.

Each master or concentrator enters its own address into the "Concentrator address" field of the "Message header". As it turns itself on, the peripheral synchronizes with all the bearers it can receive.

The peripheral will remain synchronized with all bearers until it finds its own address; then it will focus on receiving that concentrator only.

All the various concentrators are connected to a central unit, which establishes the address assignment policy by evaluating the various intensities of the received signals.

### Time slot management.

As mentioned above, there are two types of time slots, i.e. "big" ones, which can contain information, and "small" ones, which can only contain an Ack or Nak reply or a simple event.

"Big" time slots are used for a reply to a particular Enquire message, in which the peripheral's state is detailed by including, for example, the RSSI value, the number of bearer reception errors, any software errors or warnings, measured software execution times, etc.

Upon each interrogation, the peripheral will normally have a "small" time slot available for sending the ACK/NAK

When the peripheral receives a particular command putting it into the "WORKING" state, it will have at its disposal a static time slot for sending, within such time slot, the various events acquired, without conflicting with other peripherals.

Alternatively, the peripheral will have at its disposal particular spare time slots called "Event spare TS", where it will be able to send events even without being assigned a static time slot; in this case, however, it may come into conflict with other peripherals. A particular time slot, called "Cyclical TS", will nevertheless be available, reserved in the multiplot, defined as the matching between its own address and the cyclical address in the bearer.

A typical time slot configuration may be the following:

| | | | | |
|---|---|---|---|---|
| Bearer | Big time slot | Small time slot | Event spare TS | Cyclical TS |

In this configuration four time slot categories are identified:
1. Big time slot: used for replies to enquiries.
2. Small time slot: used upon assignment by the concentrator for ACKs and simple events.
3. Event spare TS: used for events when no time slot has been previously assigned by the concentrator.
4. Cyclical TS time slot: multiplot-managed; the peripheral can only gain access when its own address matches the "Cyclical address" field in the bearer.

### Exchange of messages.

In this type of protocol a confirmation is needed for the notification of the correct reception by the sender transmission unit.

If the sender is the concentrator, the peripheral will be able to send the ack message in the time slot assigned thereto.

In the case of the Enquire message, the peripheral will reply with an Enquire message containing the requested data and there will be no other confirmation by the concentrator. If the concentrator does not receive or understand the reply, then it will send a second Enquire message. Of course, Enquire messages must not alter the peripheral's state, e.g. delete the accumulated data.

The concentrator will have at its disposal a particular command for deleting a static time slot.

If the sender is the peripheral, then the concentrator will, upon correct reception of the message, put a reception ACK command into the bearer. Upon reception of this command, the peripheral will stop re-sending it. This ACK command will have the same structure as a generic command, with an empty data field.

### Header message: message decoding.

By analyzing these two bytes of the Header message, both the concentrator and the peripheral will get all the information necessary for understanding which unit (peripheral or concentrator) sent the message.

This block contains three different field types:

| name | use |
|---|---|
| Total message length | Also used by the framer for knowing when the message ends. |
| Message type | Used for identifying the message type, i.e. whether it is a reply or a concentrator message. |
| | The various values used in the example will be indicated below. |
| Concentrator address | Address of the concentrator that emitted the bearer. |
| | If = 0 then it is a peripheral |

### Message type.

In the non-limiting example described herein, the following definitions have been used:

| Value | Name | |
|---|---|---|
| 0 | TYB_PERIFERAL_REPLY | Message from peripheral. |
| 1 | TYB_MSG_BROADCASTING | Broadcasting message from concentrator. |
| 2 | TYB_MSG_ SLEEP_ NO_INFO | System in sleep mode, the peripherals listen to the master very slowly, in order to save energy, every N2 bearers. |
| 3 | TYB_MSG_WORK_INFO | System in working mode; it listens to the master every N1 bearers and may receive the hot command to listen to all bearers. |
| 4 | TYB_MANU_F0 | System in maintenance mode, all peripherals listen to all bearers. |
| 5,6,7 | SPARE | Reserved for future use. |

The present invention can advantageously be implemented, at least partly, by means of a computer program, which comprises coding means for implementing one or more steps of the method when said program is executed by a computer. It is understood, therefore, that the protection scope extends to said computer program and also to computer-readable means that comprise a recorded message, said computer-readable means comprising program coding means for implementing one or more steps of the method when said program is executed by a computer.

The above-described example of embodiment may be subject to variations without departing from the protection scope of the present invention, including all equivalent designs known to a man skilled in the art.

For the purpose of keeping the implementation costs as low as possible, it is preferable to use a processor that integrates, on the same substrate, both the RF part and the processing part. For example, the above-mentioned EFR32® processor with integrated RF, produced by company Silicon Labs®, may be used.

When implementing the electronic system of the invention, it is preferable to use technologies that ensure the achievement of two important aspects:
1. Extremely accurate software control of the processor times.
2. Optimization of UART transmissions for a more efficient data exchange.

While implementing these two aspects, some innovative ideas have arisen, which will be described below.

### 1. Extremely accurate SW control of the processor times.

The following measures concerning aspect 1 are preferable in order to attain full control over the timings and turn on the radio exactly at the proper instant, i.e. neither too soon, so as to avoid undue power consumption, nor too late, so as to avoid losing any bearers.

### - Absolute time clocks.

The goal is to implement the system by using said EFR32® processor.

Times must be managed via software, and therefore it is necessary to ensure the utmost timing precision. For this reason, an absolute time is maintained, generated by an internal fixed clock at a frequency of, for example, 32,768 KHz, and reference is made to this absolute time base.

There is a 16-bit timer that obtains a complete revolution approximately every one and a half days, which is more than sufficient to space out all events.

Therefore, the various processes do not program times as delays, but as absolute times, thereby avoiding errors due to the software execution time.

Furthermore, the operating system provides narrow timing services, i.e. the exact interrupt routine call time, which is necessary to establish the various time origins.

Of course, due to an excessive delay in the execution of the software it may happen that the programming time falls in the past, in which case a recovery procedure will be called.

### - Just-In-Time bearer.

For power consumption optimization, it is preferable to turn on the radio just before the programmed instant of bearer reception.

It must be stated beforehand that a normal RF transmission is preceded by the generation of a preamble, which is a sequence of zeros and ones, and a synchronization signal indicating the transmission start.

The receiver needs a certain number of preamble bits for having the circuits of the receiver correctly obtain the clock. Such number of bits also depends on the intensity of the received signal, since the signal becomes less clean as the reception threshold is approached, thus requiring a longer preamble.

In order to obtain the utmost saving, therefore, it is preferable to use different bit lengths as a function of the RSSI, which is an index of the intensity of the received signal.

It is preferable to set a threshold around -75 dBm and a preamble length of 3 bytes below this value and of 1.3 bytes above this value.

Thus, the concentrator will emit a longer preamble, and the receiver of the peripheral will turn itself on at the right moment.

The system therefore calculates the real radio activation time and adjusts the delay so as to cause the activation to occur exactly at the desired instant based on the value chosen as a function of the measured RSSI.

This mechanism allows turning on the radio exactly at the right time, thus ensuring the utmost power saving.

The advantages of this measure are three:
The receiver turns itself on during the emission of the transmitter's preamble (which is emitted for longer than necessary).

Adjustment loop for managing the synchronization advance.

Use of different reference values according to reception criticality, low signal detected by RSSI measurement.

### 2- Optimization of UART transmissions for a more efficient data exchange.

The following measures are to be preferred in order to be able to transfer the information from the Linux board to the embedded board with minimal delays and in the most efficient manner.

### - 7-bit binary coding.

The data are inputted to the device via a UART.

In order to create a reliable protocol, it is preferable to use check characters identifying the beginning and the end of the buffer. For this reason, it is necessary to encode the binary data over a number other than 8 so as to keep some spare configurations.

An 8-bit to 6-bit coding is normally used. In this case, in order to maximize the band and minimize the overload, a 7-bit coding has been employed by using high ascii.

The packet is divided into septets, and the seven highest bits transmitted in the eighth one are collected.

A field is thus obtained wherein the various characters are comprised between 128 and 255, with bit 7 high. This packet may be followed by a low ascii text field that does not need to be encoded.

Therefore, the characters are divided as follows:
From 0 to 0x1F (check characters)
From 0x30 to 0x7F (normal ascii characters)
From 0x80 to 0xFF (high ascii characters containing a 7/8 encoded binary buffer)

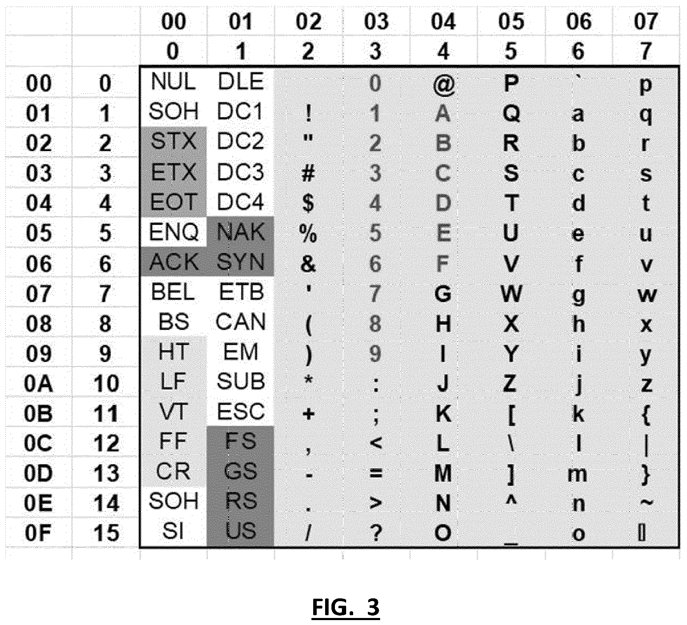

Figure 3 shows an exemplary table of the characters that may be used, namely the following:
- printable characters and normal print control characters, data fields and checksums, HT, LF, VT, FF, CR, and columns 2-7;
- STX, ETX, EOT buffer delimiter characters for framing and de-framing;
- NAK, ACK, SYN, FS, GS, RS, US characters for special use, handled by the protocol.
- Full duplex protocol with ACK e NAK

Normally, two distinct packets are sent in succession at different times by utilizing only the half-duplex line.

The Master typically outputs a packet and the Slave responds with a packet.

Both packets contain the ACK/NAK information, which indicates if the previous packet has been understood correctly, so that it can be sent again in case of improper reception. This situation can be illustrated by means of the following diagram.

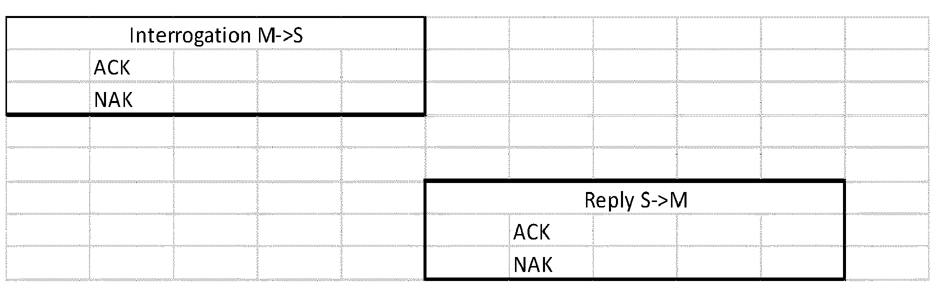

In the present context, instead, the ACK / NAK information indicating the correct reception of the buffer is sent externally to the packet, so that the following situation may arise:

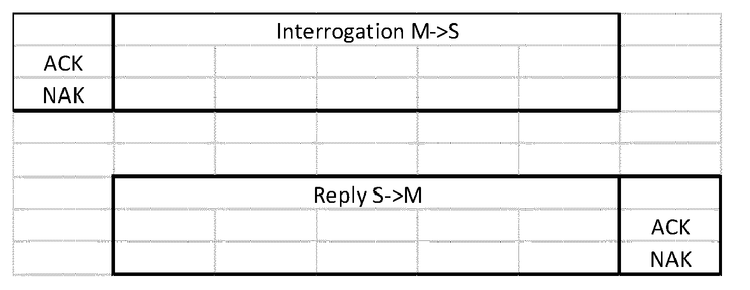

The master emits the simple ACK / NAK information indicating that the previously received message has been understood.

After this information the Master sends the data packet.

Upon reception of the simple ACK / NAK information, the slave transmits its data, which are transmitted simultaneously with the Master's data.

Upon reception of the correct packet, the slave will send the simple ACK / NAK information.

The following figure shows an equal duration of the packets; in fact, different situations may arise, like the following.

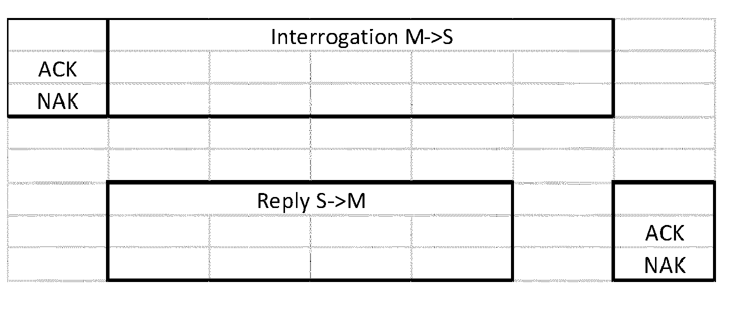

In this case, the slave waits for the buffer to be completed before sending the ACK / NAK information.

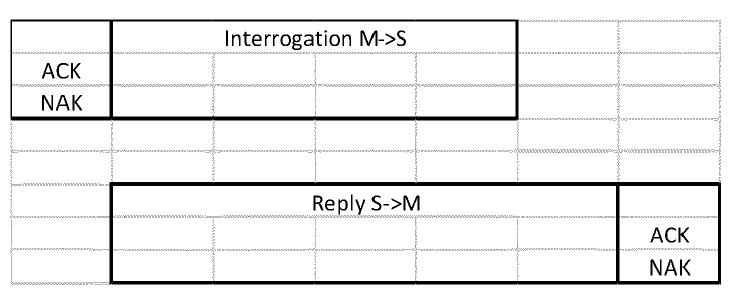

In this case, the slave completes its transmission before sending the ACK / NAK information.

The elements and features shown in the various preferred embodiments may be combined together without however departing from the protection scope of the present invention.

The advantages deriving from the application of the present invention are apparent, as described by way of example below.

The protocol of the invention provides the following important improvements:

### Extremely low power consumption.

This is accomplished in two ways:
- The existence of the bearer allows the peripherals to synchronize and wake up at the right time.
- The fields have been reduced to the bare essential; the communication problem has been much simplified; the sizes of the data to be transmitted are minimal, as illustrated in the above diagrams.

From this viewpoint, let us try to evaluate the power consumption due to peripheral reception.

Let us assume a receiver that draws 10 mA when active, and a 3Ah battery, one third of which (i.e. 1 Ah) is reserved for communication.

If the receiver were always active, the battery would last 100 hours (1000/10), i.e. a little longer than 4 days.

Let us now calculate what would happen when turning on the receiver once every second and listening to an average bearer.

The size of the average bearer must however be evaluated first.

The bytes in the minimum bearer are 6 for payload + 14 extra, for a total of 20 bytes, corresponding to 320 µSec.

If we add other 20 bytes of average commands, we get a total of 40 bytes, corresponding to 740 µSec.

Let us add 100 µSec, which is one part of 10,000 of a second, which may be a huge error in the quartz, plus additional 160 µSec for various processing tasks.

A rounded total of 1 mSec is thus obtained, i.e. one thousandth, so that the average consumption drops from 10 mA to 10 µA and battery life changes from 4 days to 4,000 days, i.e. more than 10 years.

Should we even add another 40 data bytes, we would obtain 2 msec with a duty of 1/500 and a consumption of 20 µA for a battery life of 5 years: this would still be a very acceptable result.

Having the HOT command available, the user can keep all peripherals in the slow state and wake up only those that he/she believes that should be ready for promptly executing commands.

### Information transfer certainty.

The existence of ACKs ensures information transfer certainty.

ACKs have been encoded to a bare minimum: only 20 bytes, corresponding to 320 µSec in total.

They also contain one byte for synthetic peripheral status information.

### Almost no conflicts (only in particular situations).

No conflicts arise during the normal operation.

Conflicts may only arise when peripherals send data without having been enabled to do so and without having been assigned a static time slot.

It is nevertheless possible to assign an extra time slot "Cyclical TS", which may be used by the peripherals in time-division and may be the last communication resource void of conflicts.

In practice, each peripheral will only be able to transmit data in this time slot when its address appears, also in this case avoiding any conflict.

However, this transmission is disadvantageously slow because the peripheral may have to wait for the presence of its own address, and with 240 peripherals the waiting time may be as long as one minute.

From the above description, those skilled in the art will be able to produce the object of the invention without introducing any further construction details.

## Claims

1. Method of communication via a "local-area" bidirectional wireless protocol between at least one master electronic unit and one or more peripheral electronic units, comprising:
- providing at least one master electronic unit (M), each master electronic unit (M) being adapted to output messages comprising a cyclical bearer containing data including commands intended for one or more of said peripheral electronic units (P1,....Pm) connected to it only, and to receive replies from said one or more peripheral electronic units (P1,....Pm) within time intervals assigned by said master electronic unit (M) between successive bearers, in non-overlapping time slots among different peripheral electronic units,
- providing one or more peripheral electronic units (P1,....Pm), each one adapted to synchronize with said master electronic unit (M) in order to receive said cyclical bearer, to acknowledge that it is the addressee of said cyclical bearer, and to send one or more reply messages to said master electronic unit (M) within said time intervals between successive bearers,
- said cyclical bearer comprises a header field and a commands field,
- said header field comprises: a first message-header field of fixed length, containing data adapted to identify the sender, whether a master electronic unit (M) or a peripheral electronic unit (P1,....Pm); a Bearer-Header field of fixed length, containing addresses of said one or more peripheral electronic units (P1,....Pm) to be connected, system data adapted to establish communication rules, a progressive counter field (Counter240) adapted to number the cyclical bearers, a cyclical data field (data240) containing status data and rules, a cyclical address field of said peripheral electronic units to be connected;
- said commands field, of variable length, comprises data relating to commands for said one or more peripheral electronic units (P1,....Pm) to be connected, comprising, for each peripheral electronic unit to be connected, data relating to: peripheral address, command length, time slot number, command identifier, Id-session transaction identifier;
- each one of said reply messages comprises: a second message-header field of fixed length, containing data adapted to identify whether the transmitting unit is said master electronic unit (M) or one or more of said peripheral electronic units (P1,....Pm), a header-reply field of fixed length, containing data adapted to identify the peripheral address and the message type, a header-data field, containing data associated with the reply.

2. Method as in claim 1, comprising an initial step of synchronizing said one or more peripheral electronic units (P1,....Pm) to be connected with said master electronic unit (M), wherein each one of said peripheral electronic units (P1,....Pm) to be connected:
- searches said Cyclical Address field for the presence of its own address and synchronizes with the cyclical bearer containing said address;
- reads system data in said Counter240 and Data240 fields in order to learn the communication rules, comprising data about said time slots.

3. Method as in claim 2, wherein said time slots are of one of the following types as a function of their size:
- big time slot, containing data relating to one or more of the following pieces of information:
RSSI and line quality: indicates the peripheral's reception quality
Time Measure: indicates the times of execution of the individual tasks (for diagnostic purposes)
Special Time: other times
Errors: system errors (particular traps)
Warnings: system faults (particular traps)
Sections: correctness of the code in the various sections and version thereof
Battery: battery voltage under a particular load
- small time slot, containing data relating to synthetic information about the peripheral contained in one byte.

4. Method as in any one of the preceding claims, wherein said master electronic unit (M) generates said cyclical bearer that contains said commands included in a preloaded table, and transmits said cyclical bearer with synchronization under interrupt to said one or more peripheral electronic units (P1,....Pm), which decode said cyclical bearer and execute said commands, outputting executed command signals in said reply messages.

5. Method as in any one of the preceding claims, wherein said master electronic unit (M) and said one or more peripheral electronic units (P1,....Pm) operate with such synchronization that said one or more peripheral electronic units (P1,....Pm) receive said cyclical bearer:
- every BaseTime, or
- one cyclical bearer every N1 or every N2 (with N2 >> N1).

6. Method as in claim 5, wherein a peripheral electronic unit, in case of loss of synchronization, executes a "sleeping" procedure comprising the switching into an alternately active and inactive state, according to a progressive time sequence, followed by a "wake-up" step for subsequent normal operation.

7. Method as in any one of the preceding claims, comprising:
- providing multiple master electronic units (M),
- providing a synchronization signal outputted by one of said multiple master electronic units (M) and adapted to synchronize said multiple master electronic units (M) with one another,
- providing a center for coordinating the activities of said multiple master electronic units (M), said center supplying to said multiple master electronic units (M) said commands for the respective one or more peripheral electronic units (P1,....Pm), and an identifier of said one of said multiple master electronic units (M).

8. Electronic system configured for using said method as in any one of the preceding claims, comprising:
- one or more of said master electronic units (M),
- one or more of said peripheral electronic units (P1,....Pm), each one adapted to synchronize with one of said master electronic units (M),
said one or more master electronic units (M) and one or more peripheral electronic units (P1,....Pm) comprising means for communicating via said bidirectional wireless protocol.
